# EUROPEAN PATENT SPECIFICATION

(11) **EP 3 984 420 B1**
(45) Date of publication and mention of the grant of the patent: **12.02.2025**
(21) Application number: 20804926.2
(22) Date of filing: 12.05.2020
(51) Int. Cl.: B01F 23/236, B01F 23/2361, A23L 2/54, F16K 17/06

(54) **PRESSURE-ADJUSTABLE PNEUMATIC SYSTEM OF SODA MACHINE**
DRUCKEINSTELLBARES DRUCKLUFTSYSTEM FÜR EINE SODAMASCHINE
SYSTÈME PNEUMATIQUE À PRESSION RÉGLABLE DE MACHINE À SODA

(30) Priority: 14.05.2019 CN 201920694207 U
(43) Date of publication of application: 20.04.2022
(73) Proprietor: Guangzhou Yike Trading Co., Ltd., Guangzhou (CN)
(72) Inventor: Guan, Jinye, Kaiping, Guangdong 529300 (CN)
(74) Representative: Longoni, Alessandra
(86) International application number: PCT/CN2020/089795
(87) International publication number: WO 2020/228699

(56) References cited:
- EP-A1- 0 935 992
- WO-A1-2018/148843
- CN-A- 103 492 061
- CN-A- 105 078 252
- CN-U- 202 020 297
- CN-U- 202 262 390
- CN-U- 205 514 109
- CN-U- 205 514 109
- CN-U- 206 904 569
- CN-U- 208 692 985
- CN-U- 210 810 568
- US-A1- 2008 041 232
- US-A1- 2014 373 936

## Description

### TECHNICAL FIELD

The present patent relates to a pneumatic system of a soda machine.

### BACKGROUND

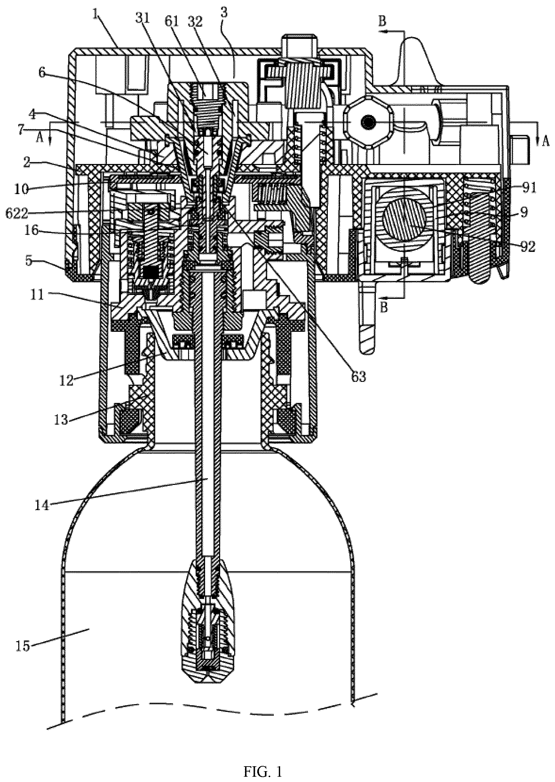

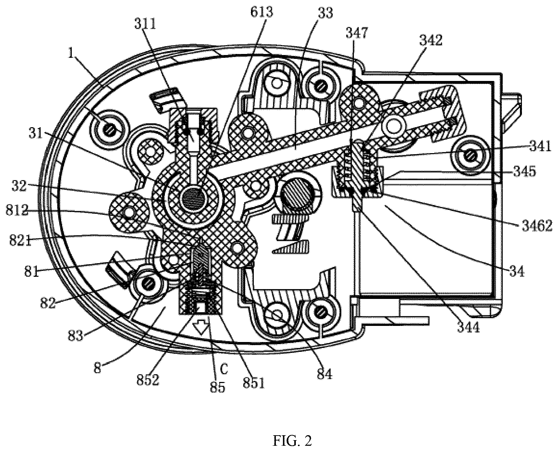

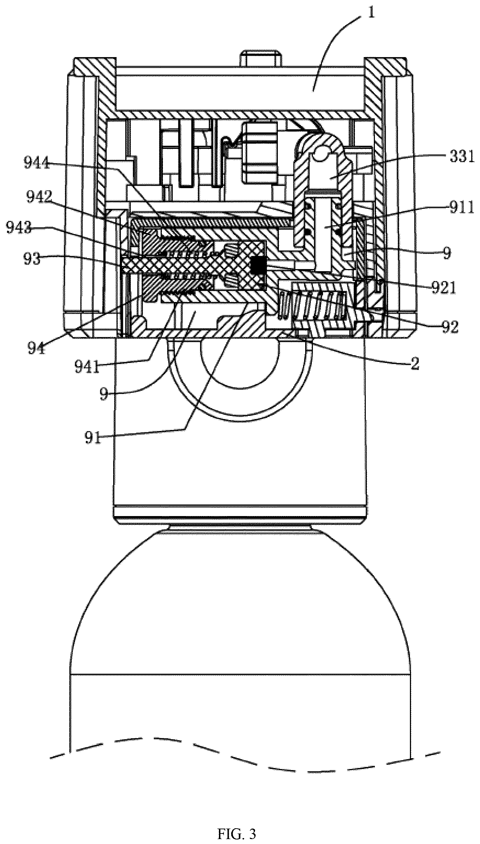

At present, Chinese patent publication CN210810568U, entitled as PNEUMATIC SYSTEM OF SODA MACHINE INTEGRATING AIR INLET, DRIVING, PRESSURE RELIEF AND EXHAUST discloses a pneumatic system of soda machine integrating air inlet, driving, pressure relief and exhaust that comprises an upper cover 1, an air inlet support 2, an air distribution valve 3, a support base 4, a sub-machine support 5, an air inlet nozzle assembly 6, a truncated cone sleeve 7, a safety valve 8 and a piston-type pressure driving device 9. As shown in FIG. 1, FIG. 2 and FIG. 3, of the known prior art the exhaust driving pipeline 33 is provided with an interface 331, the piston-type pressure driving device 9 is fixed on the air inlet support 2, and the piston pressure driving device 9 is communicated with the interface 331. As shown in FIG. 1 and FIG. 3, the piston-type pressure driving device 9 comprises a cylinder 91 with an open end, an air inlet interface 911 provided at the air inlet end of the cylinder, a piston 92, a sealing rubber plug 921, an ejector rod 93 connected with the piston, a spring and a push rod nut 94, wherein the open end of the cylinder 91 is provided with internal threads; the push rod nut 94 comprises a body part 941, an operating part 942 surrounding the body part for rotating a tool, an upper guide hole 943 provided on the body part and a counter hole 944; the body part 941 comprises an external thread part and a sealing part; the air inlet interface 911 is inserted into the interface 331 of the exhaust driving pipeline 33, the sealing rubber plug 921 is provided at one end of the piston 92, the sealing rubber plug 921 is fitted with the closed air inlet of the cylinder 92, the spring is sleeved on the ejector rod 93, the external thread of the push rod nut 94 is screwed with the internal thread of the cylinder 91; the spring extends into the counter bore 944, and the ejector rod 93 extends through the guide hole 943. The ejector rod drives the locking mechanism of the air outlet valve of the main body. The existing problem of this known prior art is that when the elasticity of the spring in the piston-type pressure drive device is adjusted, the adjustment can only be carried out after disassembly, so that the pressure drive of the soda bottle of the sub-machine is adjusted.

Patent publication CN205514109U discloses a pressure adjustable pneumatic system of a soda machine according to the preamble of claim 1.

### SUMMARY

The purpose of the present patent is to provide a pressure-adjustable pneumatic system of a soda machine, which can conveniently adjust the elasticity of the spring, keep different pressures in the soda bottle, and manufacture soda with different concentrations.

The present patent is realized as follows: a pressure-adjustable pneumatic system of a soda machine, comprising an upper cover, an air inlet support, an air distribution valve, a sub-machine support, a safety valve, and a piston-type pressure driving device, wherein the air distribution valve comprises an air inlet cavity, an air inlet interface communicated with the air inlet cavity, an exhaust cavity surrounding the air inlet cavity, an exhaust driving pipeline communicated with the exhaust cavity, and an exhaust valve provided on the exhaust driving pipeline, the exhaust driving pipeline is provided with an interface, the piston-type pressure driving device comprises a cylinder with an open end, an air inlet interface provided at the air inlet end of the cylinder, a piston, a sealing rubber plug, an ejector rod connected with the piston, a spring and a push rod nut, wherein the open end of the cylinder is provided with internal threads; the push rod nut comprises a body part, an operating part surrounding the body part, an upper guide hole provided on the body part and a counter hole; the body part comprises an external thread part and a sealing part; the sealing rubber plug is provided at one end of the piston, the sealing rubber plug is fitted with the closed air inlet of the cylinder, the spring is sleeved on the ejector rod, the external thread of the push rod nut is screwed with the internal thread of the cylinder; the spring extends into the counter bore, the ejector rod extends through the guide hole, the piston-type pressure driving device is fixed on the air inlet support, the air inlet interface is inserted into the interface; the sub-machine support is connected with the outer cover and the lower end of the air inlet support; wherein the upper cover is provided with a knob hole; the operating part is provided with a shaft head; the air inlet support is provided with a circular counter bore, the bottom plate of the circular counter bore is provided with a through hole, and the through hole is opposite to the shaft head;
the system further comprises a driving base, a knob, a driving gear, a driving wheel set, a driven wheel set, and a drive gear;
the driving base comprises a circular base cavity, a driving wheel set base and a driven wheel set base, wherein the circular base cavity is communicated with the driving wheel set base; the driving wheel set comprises a first gear, a second gear and a fixed shaft; the driven wheel set comprises a speed reducing wheel, a driven wheel and a rotating shaft, the driven wheel comprises a shaft body, a cylinder with an open lower part and teeth provided at the open end of the cylinder;
the driving base is fixed on the air inlet support, the lower shaft body of the driving gear is rotatably fitted with the bottom plate of the circular base cavity, the connecting rod at the upper end is connected with the connecting part of the knob; the first gear and the second gear are provided vertically and pivotedly connected to a driving wheel set base by means of a fixed shaft, the first gear is engaged with the driving gear; a rotating shaft is rotatably fitted with a driven wheel set base, the upper end of the rotating shaft is fixedly connected to a speed reducing wheel, and the lower end of the rotating shaft is connected to a shaft body of a driven gear;
the drive gear is fixedly connected to a shaft head, the drive gear extends into a circular counter bore through a through hole, and the driven gear is located in the circular counter bore and engaged with the drive gear; and a handheld part of the knob extends out of the upper cover through a knob hole.

According to the pressure-adjustable pneumatic system of a soda machine, the lower end of the shaft base of the first gear of the driving wheel set is provided with a sub-clutch sleeve, the upper end of the shaft base of the second gear is provided with a female clutch sleeve, and the upper end of the fixed shaft is provided with an external thread;
the upper base plate of the driving wheel set base is provided with a threaded hole, and the lower base plate is provided with a fixed hole;
the system further comprises a tension spring,
the upper end of the fixed shaft is screwed with the threaded hole and the lower end thereof is inserted with the fixed hole; the tension spring is sleeved on the fixed shaft;
the upper end and the lower end of the tension spring are fitted with the shaft base and the lower base plate of the second gear, respectively; and the sub-clutch sleeve and the female clutch sleeve are engaged.

According to the pressure-adjustable pneumatic system of a soda machine, the driving base is provided with a gear cavity, and the gear cavity is communicated with the cylindrical base through a guide hole;
the system further comprises a sliding rod and a pressure spring, wherein the sliding rod is provided with a spring base plate;
the driven end of the sliding rod passes through a pressure spring, one end of the pressure spring is fitted with the end plate of the gear cavity and the other end thereof is fitted with the spring base plate, and the driving end of the sliding rod is fitted with the gear hole on the connecting part of the knob through the guide hole.

The present patent relates to a pressure-adjustable pneumatic system of a soda machine. Since such a structure is used, the knob is rotated, the drive gear drives a push rod nut to rotate, and the elasticity of a spring is adjusted, so that the internal pressure of an exhaust driving pipeline drives a piston, the purpose of making soda having different concentrations is achieved, and adjustment is convenient.

### BRIEF DESCRIPTION OF THE DRAWINGS

FIG. 1 is a cross-sectional view of the prior art.
FIG. 2 is a view A-A of FIG. 1.
FIG. 3 is a view B-B of FIG. 1.

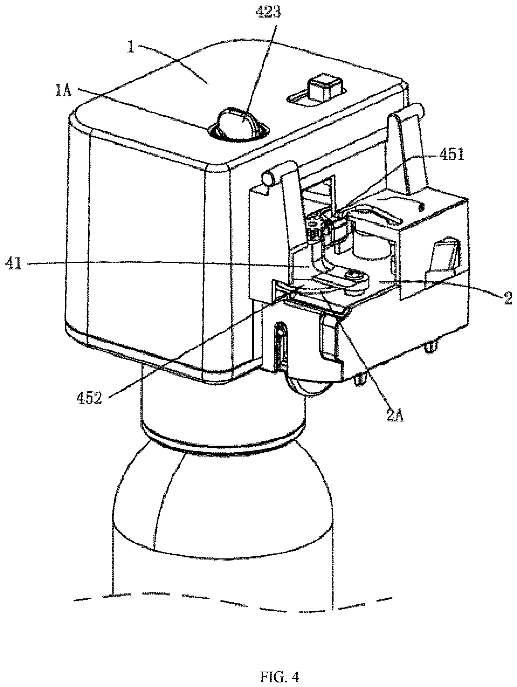

FIG. 4 is a perspective view of the present patent.

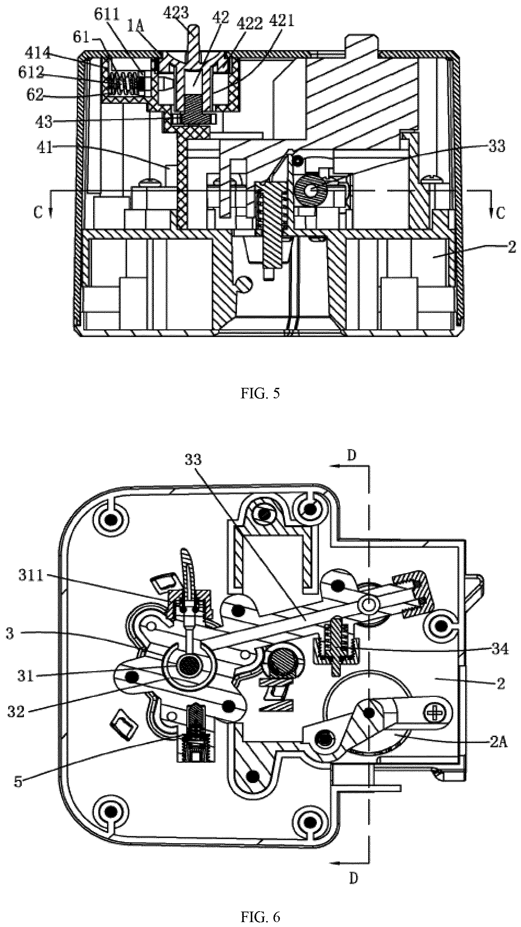

FIG. 5 is a cross-sectional view of the present patent.
FIG. 6 is a view C-C of FIG. 5.

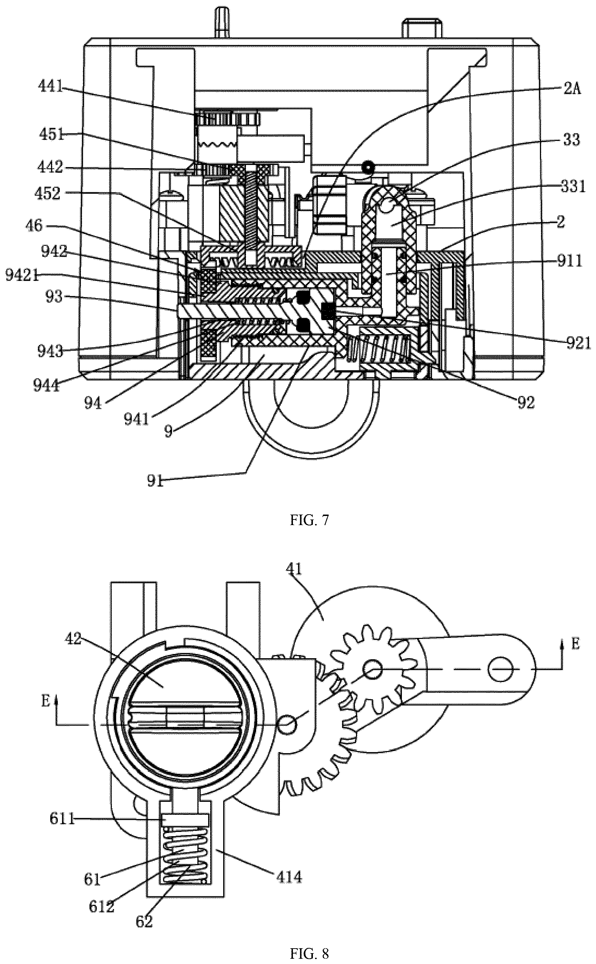

FIG. 7 is a view D-D of FIG. 6.
FIG. 8 is a top view of a driving mechanism according to the present patent.

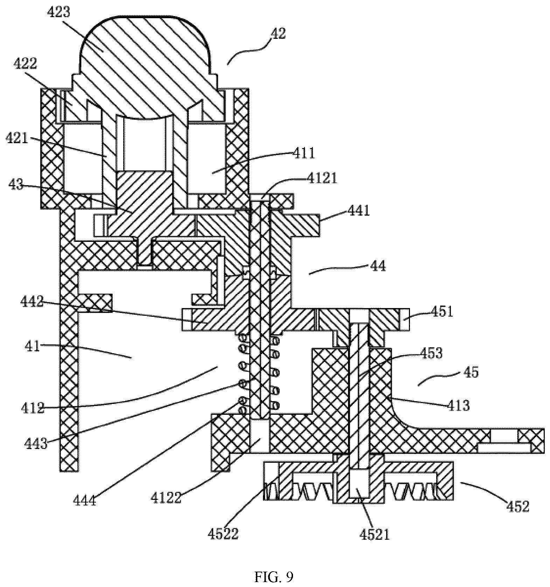

FIG. 9 is a view E-E of FIG. 8.

### DETAILED DESCRIPTION OF THE EMBODIMENTS

The present patent will be further described with reference to the attached drawings.

As shown in FIG. 1, a pressure-adjustable pneumatic system of a soda machine comprises an upper cover 1, an air inlet support 2, an air distribution valve 3, a sub-machine support 5, a safety valve 8, and a piston-type pressure driving device 9. The air distribution valve 3 comprises an air inlet cavity 31, an air inlet interface 311 communicated with the air inlet cavity, an exhaust cavity 32 surrounding the air inlet cavity, an exhaust driving pipeline 33 communicated with the exhaust cavity, and an exhaust valve 34 provided on the exhaust driving pipeline. The exhaust driving pipeline 33 is provided with an interface 331. The piston-type pressure driving device 9 comprises a cylinder 91 with an open end, an air inlet interface 911 provided at the air inlet end of the cylinder, a piston 92, a sealing rubber plug 921, an ejector rod 93 connected with the piston, a spring and a push rod nut 94. The open end of the cylinder 91 is provided with internal threads. The push rod nut 94 comprises a body part 941, an operating part 942 surrounding the body part, an upper guide hole 943 provided on the body part and a counter hole 944. The body part 941 comprises an external thread part and a sealing part. The sealing rubber plug 921 is provided at one end of the piston 92. The sealing rubber plug 921 is fitted with the closed air inlet of the cylinder 91. The spring is sleeved on the ejector rod 93. The external thread of the push rod nut 94 is screwed with the internal thread of the cylinder 91. The spring extends into the counter bore 944. The ejector rod 93 extends through the guide hole 943. The piston-type pressure driving device 9 is fixed on the lower surface of the air inlet support 2. The air inlet interface 911 is inserted into the interface 331. The sub-machine support 5 is connected with the outer cover 1 and the lower end of the air inlet support 2.

The upper cover 1 is provided with a knob hole 1A. The operating part 942 is provided with a shaft head 9421; the air inlet support 2 is provided with a circular counter bore 2A, the bottom plate of the circular counter bore 2A is provided with a through hole, and the through hole is opposite to the shaft head 9421.

The system further comprises a driving base 41, a knob 42, a driving gear 43, a driving wheel set 44, a driven wheel set 45, and a drive gear 46.

The driving base 41 comprises a circular base cavity 411, a driving wheel set base 412 and a driven wheel set base 413, wherein the circular base cavity 411 is communicated with the driving wheel set base 412.

The driving wheel set 44 comprises a first gear 441, a second gear 442 and a fixed shaft 443. The driven wheel set 45 comprises a speed reducing wheel 451, a driven wheel 452 and a rotating shaft 453. The driven wheel 452 comprises a shaft body 4521, a cylinder 4522 with an open lower part and teeth provided at the open end of the cylinder.

The driving base 41 is fixed on the air inlet support 2. The lower shaft body of the driving gear 43 is rotatably fitted with the bottom plate of the circular base cavity 411. The connecting rod at the upper end is connected with the connecting part 421 of the knob 42. The body part 422 of the knob 42 is rotatably fitted with the circular base cavity 411. The first gear 441 and the second gear 442 are provided vertically and pivotedly connected to a driving wheel set base 412 by means of a fixed shaft 443. The first gear 441 is engaged with the driving gear 43. A rotating shaft 453 is rotatably fitted with a driven wheel set base 413. The upper end of the rotating shaft is fixedly connected to a speed reducing wheel 451, and the lower end of the rotating shaft is connected to a shaft body 4521 of a driven gear 452.

The drive gear 46 is fixedly connected to a shaft head 9421. The drive gear 46 extends into a circular counter bore 2A through a through hole. The driven gear 452 is located in the circular counter bore 2A and engaged with the drive gear 46. A handheld part 421 of the knob 42 extends out of the upper cover 1 through a knob hole 1A.

The lower end of the shaft base of the first gear 441 of the driving wheel set 44 is provided with a sub-clutch sleeve 4411, the upper end of the shaft base of the second gear 442 is provided with a female clutch sleeve 4421, and the upper end of the fixed shaft 443 is provided with an external thread.

The upper base plate of the driving wheel set base 412 is provided with a threaded hole 4121, and the lower base plate is provided with a fixed hole 4122.

The system further comprises a tension spring 444.

The upper end of the fixed shaft 443 is screwed with the threaded hole 4121 and the lower end thereof is inserted with the fixed hole 4122. The tension spring 444 is sleeved on the fixed shaft 443. The upper end and the lower end of the tension spring 444 are fitted with the shaft base and the lower base plate of the second gear 442, respectively. The sub-clutch sleeve 4411 and the female clutch sleeve 4421 are engaged.

The driving base 41 is provided with a gear cavity 414, and the gear cavity 414 is communicated with the cylindrical base 411 through a guide hole.

The system further comprises a sliding rod 61 and a pressure spring 62, wherein the sliding rod 61 is provided with a spring base plate 611.

The driven end 612 of the sliding rod 61 passes through a pressure spring 62. One end of the pressure spring 62 is opposite to the end plate of the gear cavity 414 and the other end thereof is fitted with the spring base plate 611. The driving end of the sliding rod 61 is fitted with the gear hole on the connecting part 421 of the knob 42 through the guide hole.

The above is only the preferred embodiment of the present patent.

## Claims

1. A pressure-adjustable pneumatic system of a soda machine, comprising an upper cover (1), an air inlet support (2), an air distribution valve (3), a sub-machine support (5), a safety valve (8), and a piston-type pressure driving device (9), wherein the air distribution valve comprises an air inlet cavity (31), an air inlet interface (311) communicated with the air inlet cavity, an exhaust cavity (32) surrounding the air inlet cavity, an exhaust driving pipeline (33) communicated with the exhaust cavity, and an exhaust valve (34) provided on the exhaust driving pipeline, the exhaust driving pipeline (33) is provided with an interface (331), the piston-type pressure driving device (9) comprises a cylinder (91) with an open end, an air inlet interface (911) provided at the air inlet end of the cylinder, a piston (92), a sealing rubber plug (921), an ejector rod (93) connected with the piston, a spring and a push rod nut (94), wherein the open end of the cylinder (91) is provided with internal threads; the push rod nut (94) comprises a body part (941), an operating part (942) surrounding the body part, an upper guide hole (943) provided on the body part and a counter hole (944); the body part /941) comprises an external thread part and a sealing part; the sealing rubber plug (921) is provided at one end of the piston (92), the sealing rubber plug (921) is fitted with the closed air inlet of the cylinder (91), the spring is sleeved on the ejector rod (93), the external thread of the push rod nut (94) is screwed with the internal thread of the cylinder (91); the spring extends into the counter bore (944), the ejector rod (93) extends through the upper guide hole (943), the piston-type pressure driving device (9) is fixed on the air inlet support (2), the air inlet interface (911) is inserted into the interface (331); the sub-machine support (5) is connected with the outer cover (1) and the lower end of the air inlet support (2); wherein the upper cover (1) is provided with a knob hole (1A); the operating part (942) is provided with a shaft head (9421); the air inlet support (2) is provided with a circular counter bore (2A), the bottom plate of the circular counter bore is provided with a through hole, and the through hole is opposite to the shaft head (9421);
**characterized in that** the system further comprises a driving base (41), a knob (42), a driving gear (43), a driving wheel set (44), a driven wheel set (45), and a drive gear (46);
the driving base (41) comprises a circular base cavity (411), a driving wheel set base (412) and a driven wheel set base (413), wherein the circular base cavity is communicated with the driving wheel set base; the driving wheel set (44) comprises a first gear (441), a second gear (442) and a fixed shaft (443); the driven wheel set (45) comprises a speed reducing wheel (451), a driven wheel (452) and a rotating shaft (453), the driven wheel comprises a shaft body (4521), a cylinder (4522) with an open lower part and teeth provided at the open end of the cylinder;
the driving base (41) is fixed on the air inlet support (2), the lower shaft body of the driving gear (43) is rotatably fitted with the bottom plate of the circular base cavity (411), the connecting rod at the upper end is connected with the connecting part (421) of the knob (42); the first gear (441) and the second gear (442) are provided vertically and pivotedly connected to the driving wheel set base (412) by means of the fixed shaft (443), the first gear is engaged with the driving gear (43); the rotating shaft (453) is rotatably fitted with the driven wheel set base (413), the upper end of the rotating shaft is fixedly connected to the speed reducing wheel (451), and the lower end of the rotating shaft is connected to the shaft body (4521) of the driven gear (452);
the drive gear (46) is fixedly connected to the shaft head (9421), the drive gear extends into the circular counter bore (2A) through the through hole, and the driven gear (452) is located in the circular counter bore and engaged with the drive gear; and a handheld part (421) of the knob (42) extends out of the upper cover (1) through a knob hole (1A).

2. The pressure-adjustable pneumatic system of a soda machine according to claim 1, wherein the lower end of the shaft base of the first gear (441) of the driving wheel set (44) is provided with a sub-clutch sleeve (4411), the upper end of the shaft base of the second gear (442) is provided with a female clutch sleeve (4421), and the upper end of the fixed shaft (443) is provided with an external thread;
the upper base plate of the driving wheel set base (412) is provided with a threaded hole (4121), and the lower base plate is provided with a fixed hole (4122);
the system further comprises a tension spring (444),
the upper end of the fixed shaft (443) is screwed with the threaded hole (4121) and the lower end thereof is inserted with the fixed hole (4122); the tension spring (444) is sleeved on the fixed shaft (443); the upper end and the lower end of the tension spring (444) are fitted with the shaft base and the lower base plate of the second gear (442), respectively; and the sub-clutch sleeve (4411) and the female clutch sleeve (4421) are engaged.

3. The pressure-adjustable pneumatic system of a soda machine according to claim 1, wherein the driving base (41) is provided with a gear cavity (414), and the gear cavity is communicated with the cylindrical base (411) through a guide hole;
the system further comprises a sliding rod (61) and a pressure spring (62), wherein the sliding rod is provided with a spring base plate (611);
the driven end (612) of the sliding rod passes through a pressure spring (62), one end of the pressure spring is fitted with the end plate of the gear cavity (414) and the other end thereof is fitted with the spring base plate (611), and the driving end of the sliding rod (61) is fitted with the gear hole on the connecting part (421) of the knob (42) through the guide hole.

## Patentansprüche

1. Druckeinstellbares Druckluftsystem für eine Sodamaschine, umfassend eine obere Abdeckung (1), eine Lufteinlassstütze (2), ein Luftverteilungsventil (3), eine Untermaschinenstütze (5), ein Sicherheitsventil (8) und eine kolbenartige Druckantriebsvorrichtung (9), wobei das Luftverteilungsventil einen Lufteinlasshohlraum (31), eine mit dem Lufteinlasshohlraum in Kommunikation stehende Lufteinlassschnittstelle (311), einen den Lufteinlasshohlraum umgebenden Ablufthohlraum (32), eine mit dem Ablufthohlraum in Kommunikation stehende Abluftantriebsleitung (33) und ein an der Abluftantriebsleitung bereitgestelltes Abluftventil (34) umfasst, wobei die Abluftantriebsleitung (33) mit einer Schnittstelle (331) bereitgestellt ist, die kolbenartige Druckantriebsvorrichtung (9) einen Zylinder (91) mit einem offenen Ende, eine Lufteinlassschnittstelle (911), die an dem Lufteinlassende des Zylinders bereitgestellt ist, einen Kolben (92), einen abdichtenden Gummistopfen (921), eine mit dem Kolben verbundene Auswerferstange (93), eine Feder und eine Schubstangenmutter (94) umfasst, wobei das offene Ende des Zylinders (91) mit einem Innengewinde bereitgestellt ist; wobei die Schubstangenmutter (94) einen Körperteil (941), einen den Körperteil umgebenden Betätigungsteil (942), ein an dem Körperteil bereitgestelltes oberes Führungsloch (943) und ein Gegenloch (944) umfasst; der Körperteil (941) einen Außengewindeteil und einen Dichtungsteil umfasst; der abdichtende Gummistopfen (921) an einem Ende des Kolbens (92) bereitgestellt ist, der abdichtende Gummistopfen (921) an dem geschlossenen Lufteinlass des Zylinders (91) montiert ist, die Feder auf die Auswerferstange (93) aufgeschoben ist, das Außengewinde der Schubstangenmutter (94) mit dem Innengewinde des Zylinders (91) verschraubt ist; die Feder sich in die Gegenbohrung (944) erstreckt, die Auswerferstange (93) sich durch das obere Führungsloch (943) erstreckt, die kolbenartige Druckantriebsvorrichtung (9) an der Lufteinlassstütze (2) befestigt ist, die Lufteinlassschnittstelle (911) in die Schnittstelle (331) eingesetzt ist; die Untermaschinenstütze (5) mit der äußeren Abdeckung (1) und dem unteren Ende der Lufteinlassstütze (2) verbunden ist; wobei die obere Abdeckung (1) mit einem Knopfloch (1A) bereitgestellt ist; der Betätigungsteil (942) mit einem Wellenkopf (9421) bereitgestellt ist; die Lufteinlassstütze (2) mit einer kreisförmigen Gegenbohrung (2A) bereitgestellt ist, die Bodenplatte der kreisförmigen Gegenbohrung mit einem Durchgangsloch bereitgestellt ist und das Durchgangsloch dem Wellenkopf (9421) gegenüberliegt;
**dadurch gekennzeichnet, dass** das System ferner eine Antriebsbasis (41), einen Knopf (42), ein Antriebszahnrad (43), einen Antriebsradsatz (44), einen angetriebenen Radsatz (45) und ein Antreibzahnrad (46) umfasst;
die Antriebsbasis (41) einen kreisförmigen Basishohlraum (411), eine Antriebsradsatzbasis (412) und eine angetriebene Radsatzbasis (413) umfasst, wobei der kreisförmige Basishohlraum mit der Antriebsradsatzbasis in Kommunikation steht; der Antriebsradsatz (44) ein erstes Zahnrad (441), ein zweites Zahnrad (442) und eine feste Welle (443) umfasst; der angetriebene Radsatz (45) ein Untersetzungsrad (451), ein angetriebenes Rad (452) und eine rotierende Welle (453) umfasst, wobei das angetriebene Rad einen Wellenkörper (4521), einen Zylinder (4522) mit einem offenen unteren Teil und an dem offenen Ende des Zylinders bereitgestellten Zähnen umfasst;
die Antriebsbasis (41) an der Lufteinlassstütze (2) befestigt ist, der untere Wellenkörper des Antriebszahnrads (43) drehbar an der Bodenplatte des kreisförmigen Basishohlraums (411) montiert ist, die Verbindungsstange an dem oberen Ende mit dem Verbindungsteil (421) des Knopfes (42) verbunden ist; das erste Zahnrad (441) und das zweite Zahnrad (442) vertikal bereitgestellt sind und schwenkbar mit der Antriebsradsatzbasis (412) mittels der festen Welle (443) verbunden sind, wobei das erste Zahnrad mit dem Antriebszahnrad (43) im Eingriff ist; die rotierende Welle (453) drehbar an der angetriebenen Radsatzbasis (413) montiert ist, das obere Ende der rotierenden Welle fest mit dem Untersetzungsrad (451) verbunden ist und das untere Ende der rotierenden Welle mit dem Wellenkörper (4521) des angetriebenen Zahnrads (452) verbunden ist;
das Antreibzahnrad (46) fest mit dem Wellenkopf (9421) verbunden ist, das Antreibzahnrad sich durch das Durchgangsloch in die kreisförmige Gegenbohrung (2A) erstreckt, und das angetriebene Zahnrad (452) sich in der kreisförmigen Gegenbohrung befindet und mit dem Antreibzahnrad verbunden ist; und ein Handteil (421) des Knopfes (42) sich durch ein Knopfloch (1A) aus der oberen Abdeckung (1) erstreckt.

2. Druckeinstellbares Druckluftsystem für eine Sodamaschine nach Anspruch 1, wobei das untere Ende der Wellenbasis des ersten Zahnrads (441) des Antriebsradsatzes (44) mit einer Unterkupplungshülse (4411) bereitgestellt ist, das obere Ende der Wellenbasis des zweiten Zahnrads (442) mit einer Innenkupplungshülse (4421) bereitgestellt ist und das obere Ende der festen Welle (443) mit einem Außengewinde bereitgestellt ist;
die obere Basisplatte der Antriebsradsatzbasis (412) mit einem Gewindeloch (4121) bereitgestellt ist und die untere Basisplatte mit einem festen Loch (4122) bereitgestellt ist;
das System ferner eine Zugfeder (444) umfasst,
das obere Ende der festen Welle (443) in das Gewindeloch (4121) eingeschraubt ist und das untere Ende davon in das feste Loch (4122) eingesteckt ist; die Zugfeder (444) auf die feste Welle (443) aufgeschoben ist; das obere Ende und das untere Ende der Zugfeder (444) an der Wellenbasis beziehungsweise der unteren Basisplatte des zweiten Zahnrads (442) montiert sind; und die Unterkupplungshülse (4411) und die Innenkupplungshülse (4421) in Eingriff stehen.

3. Druckeinstellbares Druckluftsystem für eine Sodamaschine nach Anspruch 1, wobei die Antriebsbasis (41) mit einem Zahnradhohlraum (414) bereitgestellt ist und der Zahnradhohlraum durch ein Führungsloch mit der zylindrischen Basis (411) in Kommunikation ist;
das System ferner eine Gleitstange (61) und eine Druckfeder (62) umfasst, wobei die Gleitstange mit einer Federbasisplatte (611) bereitgestellt ist;
das angetriebene Ende (612) der Gleitstange durch eine Druckfeder (62) verläuft, ein Ende der Druckfeder an der Endplatte des Zahnradhohlraums (414) montiert ist und das andere Ende davon an der Federbasisplatte (611) montiert ist und das Antriebsende der Gleitstange (61) durch das Führungsloch an dem Zahnradloch an dem Verbindungsteil (421) des Knopfes (42) montiert ist.

## Revendications

1. Système pneumatique à pression réglable de machine à soda, comprenant un capot supérieur (1), un support d'entrée d'air (2), une soupape de distribution d'air (3), un support sous-machine (5), une soupape de sécurité (8) et un dispositif d'entraînement de pression de type piston (9), dans lequel la soupape de distribution d'air comprend une cavité d'entrée d'air (31), une interface d'entrée d'air (311) en communication avec la cavité d'entrée d'air, une cavité d'échappement (32) entourant la cavité d'entrée d'air, une conduite d'entraînement d'échappement (33) en communication avec la cavité d'échappement, et une soupape d'échappement (34) prévue sur la conduite d'entraînement d'échappement, la conduite d'entraînement d'échappement (33) est pourvue d'une interface (331), le dispositif d'entraînement de pression de type piston (9) comprend un cylindre (91) avec une extrémité ouverte, une interface d'entrée d'air (911) prévue à l'extrémité d'entrée d'air du cylindre, un piston (92), un bouchon d'étanchéité en caoutchouc (921), une tige d'éjection (93) reliée au piston, un ressort et un écrou de tige de poussée (94), dans lequel l'extrémité ouverte du cylindre (91) est pourvue de filetages internes ; l'écrou de tige de poussée (94) comprend une partie corps (941), une partie de fonctionnement (942) entourant la partie corps, un trou de guidage supérieur (943) prévu sur la partie corps et un contre-trou (944) ; la partie corps (941) comprend une partie de filetage externe et une partie d'étanchéité ; le bouchon d'étanchéité en caoutchouc (921) est prévu à une extrémité du piston (92), le bouchon d'étanchéité en caoutchouc (921) est assemblé à l'entrée d'air fermée du cylindre (91), le ressort est emmanché sur la tige d'éjection (93), le filetage externe de l'écrou de tige de poussée (94) est vissé avec le filetage interne du cylindre (91) ; le ressort s'étend dans le contre-alésage (944), la tige d'éjection (93) s'étend à travers le trou de guidage supérieur (943), le dispositif d'entraînement de pression de type piston (9) est fixé sur le support d'entrée d'air (2), l'interface d'entrée d'air (911) est insérée dans l'interface (331) ; le support sous-machine (5) est relié au capot extérieur (1) et à l'extrémité inférieure du support d'entrée d'air (2) ; dans lequel le capot supérieur (1) est pourvu d'un trou de bouton (1A) ; la partie de fonctionnement (942) est pourvue d'une tête d'arbre (9421) ; le support d'entrée d'air (2) est pourvu d'un contre-alésage circulaire (2A), la plaque inférieure du contre-alésage circulaire est pourvue d'un trou traversant, et le trou traversant est opposé à la tête d'arbre (9421) ;
**caractérisé en ce que** le système comprend en outre une base d'entraînement (41), un bouton (42), un engrenage d'entraînement (43), un ensemble de roues motrices (44), un ensemble de roues menées (45) et un engrenage d'entraînement (46) ;
la base d'entraînement (41) comprend une cavité de base circulaire (411), une base d'ensemble de roues motrices (412) et une base d'ensemble de roues menées (413), dans lequel la cavité de base circulaire est en communication avec la base d'ensemble de roues motrices ;
l'ensemble de roues motrices (44) comprend un premier engrenage (441), un deuxième engrenage (442) et un arbre fixe (443) ; l'ensemble de roues menées (45) comprend une roue de réduction de vitesse (451), une roue menée (452) et un arbre rotatif (453), la roue menée comprend un corps d'arbre (4521), un cylindre (4522) avec une partie inférieure ouverte et des dents prévues au niveau de l'extrémité ouverte du cylindre ;
la base d'entraînement (41) est fixée sur le support d'entrée d'air (2), le corps d'arbre inférieur de l'engrenage d'entraînement (43) est assemblé en rotation à la plaque inférieure de la cavité de base circulaire (411), la tige de liaison au niveau de l'extrémité supérieure est reliée à la partie de liaison (421) du bouton (42) ; le premier engrenage (441) et le deuxième engrenage (442) sont disposés verticalement et reliés de manière pivotante à la base de l'ensemble de roues motrices (412) au moyen de l'arbre fixe (443), le premier engrenage est en prise avec l'engrenage d'entraînement (43) ; l'arbre rotatif (453) est assemblé en rotation à la base de l'ensemble de roues motrices (413), l'extrémité supérieure de l'arbre rotatif est reliée de manière fixe à la roue de réduction de vitesse (451), et l'extrémité inférieure de l'arbre rotatif est reliée au corps d'arbre (4521) de l'engrenage entraîné (452) ;
l'engrenage d'entraînement (46) est relié de manière fixe à la tête d'arbre (9421), l'engrenage d'entraînement s'étend dans le contre-alésage circulaire (2A) à travers le trou traversant, et l'engrenage mené (452) est situé dans le contre-alésage circulaire et en prise avec l'engrenage d'entraînement ; et une partie à main (421) du bouton (42) s'étend hors du capot supérieur (1) à travers un trou de bouton (1A).

2. Système pneumatique à pression réglable de machine à soda selon la revendication 1, dans lequel l'extrémité inférieure de la base d'arbre du premier engrenage (441) de l'ensemble de roues motrices (44) est pourvue d'un manchon d'embrayage secondaire (4411), l'extrémité supérieure de la base d'arbre du deuxième engrenage (442) est pourvue d'un manchon d'embrayage femelle (4421), et l'extrémité supérieure de l'arbre fixe (443) est pourvue d'un filetage externe ;
la plaque de base supérieure de la base de l'ensemble de roues motrices (412) est pourvue d'un trou fileté (4121), et la plaque de base inférieure est pourvue d'un trou fixe (4122) ;
le système comprend en outre un ressort de tension (444),
l'extrémité supérieure de l'arbre fixe (443) est vissée avec le trou fileté (4121) et son extrémité inférieure est insérée avec le trou fixe (4122) ; le ressort de tension (444) est emmanché sur l'arbre fixe (443) ; l'extrémité supérieure et l'extrémité inférieure du ressort de tension (444) sont respectivement assemblées à la base d'arbre et à la plaque de base inférieure du deuxième engrenage (442) ; et le manchon d'embrayage secondaire (4411) et le manchon d'embrayage femelle (4421) sont engagés.

3. Système pneumatique à pression réglable de machine à soda selon la revendication 1, dans lequel la base d'entraînement (41) est pourvue d'une cavité d'engrenage (414), et la cavité d'engrenage communique avec la base cylindrique (411) par l'intermédiaire d'un trou de guidage ;
le système comprend en outre une tige coulissante (61) et un ressort de pression (62), dans lequel la tige coulissante est pourvue d'une plaque de base à ressort (611) ;
l'extrémité entraînée (612) de la tige coulissante traverse un ressort de pression (62), une extrémité du ressort de pression est assemblée à la plaque d'extrémité de la cavité d'engrenage (414) et l'autre extrémité de celui-ci est assemblée à la plaque de base à ressort (611), et l'extrémité d'entraînement de la tige coulissante (61) est assemblée au trou d'engrenage sur la partie de liaison (421) du bouton (42) à travers le trou de guidage.
